**Europäisches Patentamt**

**European Patent Office**

**Office européen des brevets**

(19)

(11) Numéro de publication: **0 337 892**
**A1**

## DEMANDE DE BREVET EUROPEEN

(12)

(21) Numéro de dépôt: **89401041.2**

(22) Date de dépôt: **14.04.89**

(51) Int. Cl.⁴: **E 02 B 11/00**
B 29 D 28/00, B 29 C 47/12

(30) Priorité: **15.04.88 FR 8805036**
**18.10.88 FR 8813711**

(43) Date de publication de la demande:
**18.10.89 Bulletin 89/42**

(84) Etats contractants désignés:
**AT BE CH DE ES FR GB GR IT LI LU NL SE**

(71) Demandeur: **NORTENE Société Anonyme dite:**
**149, avenue de Bretagne**
**F-59000 Lille (FR)**

(72) Inventeur: **Genty, Alain**
**4, rue Nouvelle**
**F-59420 Mouvaux (FR)**

**Pavy, Michel**
**11, rue Louis Pergaud**
**F-59139 Wattignies (FR)**

(74) Mandataire: **Leszczynski, André et al**
**CABINET NONY & CIE. 29 rue Cambacérès**
**F-75008 Paris (FR)**

(54) Dispositif pour réaliser un grillage en matière plastique et grillage obtenu.

(57) Dispositif pour réaliser un grillage en matière plastique constitué d'un ensemble de brins longitudinaux parallèles (L1, L'1, L"1) et d'au moins un ensemble de brins transversaux.(L2, L'2, L"2, L"3).

Il comprend un élément de filière fixe (1, 8, 12) et au moins un élément de filière mobile (2, 9, 13), disposé concentriquement et animé d'un mouvement de rotation ou d'oscillation verticale, l'élément de filière fixe présentant une pluralité de crans périphériques (4, 10, 14) en regard d'une fente annulaire (3) définie périodiquement entre les éléments de filière, et respectivement de crans (11, 15) prévus dans le ou les éléments de filière mobile, et un conformateur (5) disposé concentriquement par rapport aux éléments de filière et dont le diamètre est supérieur à celui des éléments de filière au niveau de leur extrémité inférieure et est caractérisé par le fait que le conformateur (5) comporte sur sa surface (6) au contact de laquelle passe le grillage (G) formé entre les éléments de filière (1,2) une pluralité de crans (7) dont la structure et le nombre correspondent à ceux des crans (4) prévus sur l'élément de filière fixe (1).

Fig.1

EP 0 337 892 A1

## Description

### Dispositif pour réaliser un grillage en matière plastique et grillage obtenu.

La présente invention est relative à un dispositif pour réaliser un grillage en matière plastique constitué d'un ensemble de brins longitudinaux parallèles et d'au moins un ensemble de brins transversaux, les brins du ou de chaque ensemble étant parallèles entre eux et orthogonaux ou inclinés par rapport aux brins longitudinaux en leurs entrecroisements.

Les dispositifs conventionnels pour réaliser des grillages en matière plastique comprennent à la sortie d'une extrudeuse un élément de filière fixe et au moins un élément de filière mobile disposés concentriquement et animés d'un mouvement de rotation ou d'oscillation verticale, l'élément de filière fixe présentant une pluralité de crans périphériques en regard d'une fente annulaire définie périodiquement entre les éléments de filière, et respectivement de crans prévus dans le ou les éléments de filière mobile, dans lesquels débouche la matière plastique ramollie en provenance de l'extrudeuse, et un conformateur disposé concentriquement par rapport aux éléments de filière et dont le diamètre est supérieur à celui des éléments de filière au niveau de leur extrémité inférieure.

On connait ainsi un premier type de filière mettant en oeuvre le procédé connu sous le nom de TRICAL et décrit par exemple dans le brevet français 1 601 465 et consistant à produire un grillage par découpe d'une gaine tubulaire obtenue à l'aide d'un dispositif d'extrusion continue comprenant deux éléments de filières concentriques, l'un fixe, et l'autre animé d'un mouvement d'oscillation verticale, notamment sous l'action de vérins, l'élément de filière fixe présentant une pluralité de crans périphériques situés à hauteur d'une fente annulaire définie périodiquement entre les deux éléments de filière et dans laquelle débouche la matière plastique ramollie en provenance de l'extrudeuse.

Lorsque l'élément de filière mobile verticalement se trouve en position basse on extrude les brins longitudinaux au travers des crans de l'élément de filière fixe et lorsque l'élément de filière mobile se trouve en position haute on extrude à chaque fois un filament transversal formant les brins transversaux reliant les brins longitudinaux du grillage.

Une fois formé, le grillage est amené à passer sur la surface d'un conformateur disposé concentriquement par rapport aux éléments de filière et dont le diamètre est supérieur à celui des éléments de filière au niveau de la fente d'extrusion.

On connait également le procédé NETLON décrit par exemple dans le brevet britannique 836 555 et dans lequel le grillage est obtenu par découpe d'une gaine tubulaire formée dans un dispositif d'extrusion comprenant des éléments de filière concentriques animés d'un mouvement de rotation relative, par exemple un élément de filière fixe et un élément de filière tournant, ou pour le cas d'une structure à deux nappes de brins transversaux, un élément de filière fixe et deux éléments de filière mobile tournant en sens opposé l'un de l'autre.

L'élément de filière fixe présente une pluralité de crans périphériques dont la section correspond à la section voulue pour les brins longitudinaux du grillage et le ou les éléments de filière tournants présentent une pluralité de crans dont la section correspond à la section voulue pour les brins transversaux du grillage, les crans des différents éléments de filière communiquant avec des canaux d'amenée de la matière plastique ramollie en provenance de l'extrudeuse. Les brins transversaux sont ainsi extrudés sous forme de filaments hélicoïdaux et adhèrent aux brins longitudinaux à la sortie des éléments de filière de façon à former la structure réticulaire du grillage.

Dans ce procédé également, le grillage, une fois formé, est amené à passer sur la surface d'un conformateur disposé concentriquement par rapport aux éléments de filière, le diamètre du conformateur étant supérieur à celui des éléments de filière au niveau de la sortie de ceux-ci.

Les dispositifs connus sont très largement utilisés et donnent toute satisfaction pour la réalisation de grillages présentant des nappes d'épaisseurs relativement faibles, c'est-à-dire inférieures à environ 5 mm.

Par contre, lorsque pour certaines applications, notamment pour le drainage ou pour assurer une fonction d'espacement, on cherche à utiliser des grillages de plus grande épaisseur, c'est-à-dire dans lesquels chacune des nappes présente une épaisseur supérieure à environ 5 mm, on rencontre des difficultés pour obtenir un grillage de bonne qualité, dans la mesure où l'on constate une déformation ou un écrasement du grillage lors du passage de celui-ci sur le conformateur.

La présente invention a précisément pour but un dispositif évitant cet inconvénient et permettant de réaliser des grillages épais de qualité constante.

Le dispositif selon l'invention se caractérise essentiellement par le fait que le conformateur présente sur sa surface, au contact de laquelle passe le grillage, une pluralité de crans dont la structure et le nombre correspondent à ceux des crans prévus sur l'élément de filière fixe.

Les crans réalisés sur la surface du conformateur ont une fonction d'appui et de guidage en correspondance de forme pour les brins longitudinaux du grillage, ce qui évite tout risque de déformation ou d'écrasement du grillage lors de son passage sur le conformateur.

On peut ainsi selon l'invention réaliser des grillages épais présentant une bonne rigidité et une forme parfaitement contrôlée et ce, en grande largeur, actuellement dans la pratique, jusqu'à deux mètres de large.

D'autres avantages et la caractéristique de l'invention apparaitront à la lecture de la description suivante, à donner à titre d'exemple nullement limitatif et se référant au dessin annexé, dans lequel

La figure 1 est une vue schématique partielle en demie-coupe d'un dispositif selon un premier mode de réalisation de l'invention.

La figure 2 est une vue analogue à la figure 1 d'un second mode de réalisation du dispositif selon l'invention.

La figure 3 est une vue analogue aux figures 1 et 2 d'un troisième mode de réalisation du dispositif selon l'invention.

La figure 4 illustre, vu de dessus, un fragment de grillage obtenu par le dispositif de la figure 1.

La figure 5 est une vue en coupe selon IV-IV de la figure 4.

La figure 6 illustre, vu de dessous le fragment du grillage des figures 4 et 5.

La figure 7 illustre, vu de dessus un fragment de grillage obtenu par le dispositif de la figure 2.

La figure 8 est une vue en coupe selon VIII-VIII de la figure 7.

La figure 9 illustre, vu de dessus un fragment de grillage obtenu par le dispositif de la figure 3.

La figure 10 est une vue en coupe selon X-X de la figure 9.

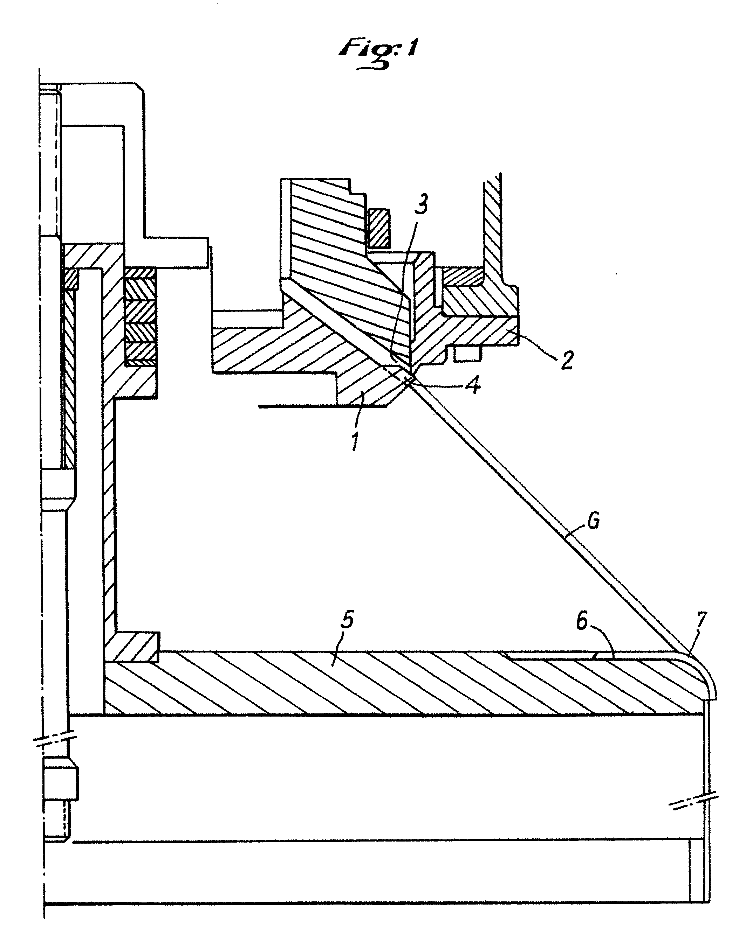

La figure 1 illustre une filière de type TRICAL comprenant un élément de filière fixe 1 et un élément de filière en forme de couronne 2 mobile verticalement sous l'action d'organes de manoeuvre tels que des vérins, non représentés, de manière à effectuer un mouvement d'oscillation verticale entre une position basse, illustrée sur la figure 1 fermant une fente annulaire d'extrusion 3, située entre les éléments de filières et une position haute (non représentée), dégageant cette fente annulaire.

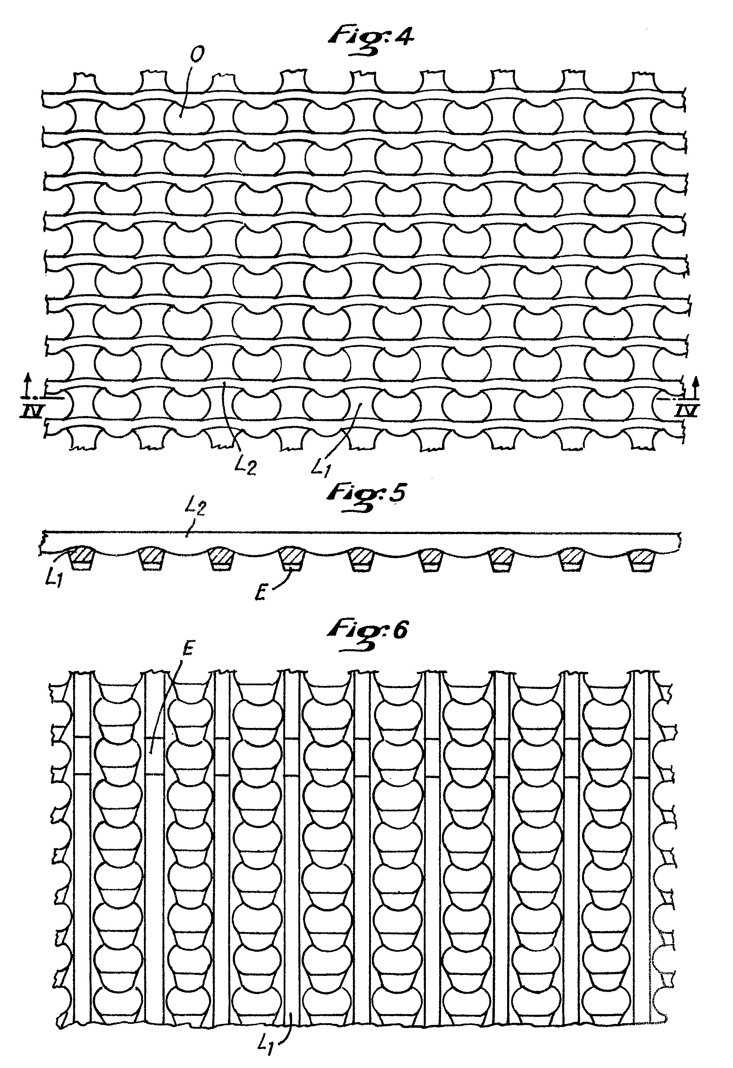

L'élément de filière fixe 1 comporte une pluralité de crans périphériques 4, de section sensiblement triangulaire, pour réaliser le grillage illustré aux figures 4 à 6.

La nappe de grillage G, une fois formée entre les éléments de filière passe sur un conformateur 5 qui, comme on le voit, présente un diamètre supérieur à celui des éléments de filières au niveau de la fente d'extrusion 3, la nappe de grillage G, entre les éléments de filière et le conformateur s'évasant en tronc de cône.

Selon l'invention, la surface 6 du conformateur sur laquelle la nappe G est amenée à passer, présente une pluralité de crans 7 correspondant en nombre, en forme et en disposition à ceux des crans 4 de l'élément de filière fixe 1.

Chaque cran 7 est ainsi en alignement avec l'un des crans 4, ce qui assure un parfait guidage et un parfait maintien de la forme des brins longitudinaux du grillage extrudé lors de son passage sur le conformateur.

On a illustré aux figures 4 à 6 le grillage obtenu.

Ce grillage qui peut avantageusement être réalisé en polyéthylène est constitué d'une pluralité de brins longitudinaux, parallèles, équidistants L1, réunis par des brins transversaux L2, également parallèles, équidistants, sensiblement perpendiculaires aux brins longitudinaux en leurs entrecroisements.

Comme on le voit notamment sur la figure 5, les brins longitudinaux présentent dans l'exemple illustré, une section sensiblement trapèzoïdale dont la grande base se situe dans le plan de la face inférieure des brins transversaux.

On obtient ainsi une structure réticulaire dont les orifices O, définis entre les brins longitudinaux et les brins transversaux, présentent chacun dans l'exemple illustré, une forme sensiblement en haricot, la surface de vide de l'ensemble des orifices O représentant environ 42 % de la surface totale. Des entailles E sont réalisées dans les brins longitudinaux L1 si l'on désire réduire la rigidité en sens longitudinal du grillage, par exemple pour permettre son conditionnement à l'état enroulé.

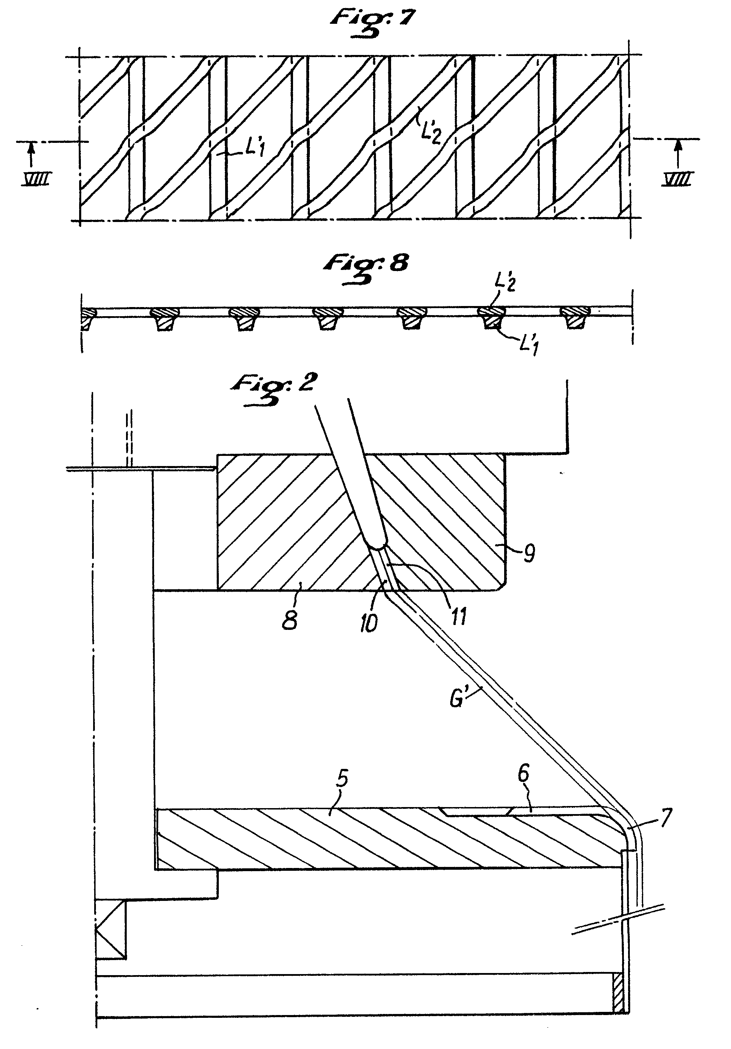

La figure 2 illustre une filière de type NETLON, comprenant un élément central de filière fixe 8 et un élément de filière périphérique en forme de couronne 9, mobile en rotation sous l'action d'organes d'entrainement non représentés.

L'élément de filière fixe 8 comporte une pluralité de crans périphériques 10 de section triangulaire dans l'exemple illustré. L'élément de filière rotatif 9 comporte une pluralité de crans 11 dans sa paroi périphérique interne.

La nappe de grillage G', une fois formée entre les éléments de filière 8 et 9 passe sur un conformateur 5 de diamètre supérieur à celui des éléments de filière au niveau de leur extrémité inférieure, la nappe de grillage G' s'évasant en tronc de cône entre les éléments de filière et le conformateur 5.

Comme dans le mode de réalisation de la figure 1, la surface 6 du conformateur sur lequel la nappe G' est amenée à passer, présente une pluralité de crans 7 correspondant en nombre, en forme et en disposition à ceux des crans 10 de l'élément de filière fixe 8.

Un exemple de grillage obtenu par le dispositif de la figure 2 est illustré aux figures 7 et 8.

Le grillage G', réalisé également de préférence en polyéthylène, est constitué d'une pluralité de brins longitudinaux, parallèles, équidistants L'1, réunis par des brins transversaux L'2, parallèles entre eux, équidistants et inclinés par rapport aux brins longitudinaux, de manière à former une structure réticulaire de type losange.

L'angle formé entre les brins transversaux et les brins longitudinaux en leurs entrecroisements est avantageusement compris entre 30 et 75 ° et de préférence de l'ordre de 45°.

Comme on le voit sur la figure 8, les brins longitudinaux L'1 présentent dans l'exemple illustré une section sensiblement trapézoïdale, dont la grande base se situe dans le plan de la face inférieure des brins transversaux L'2.

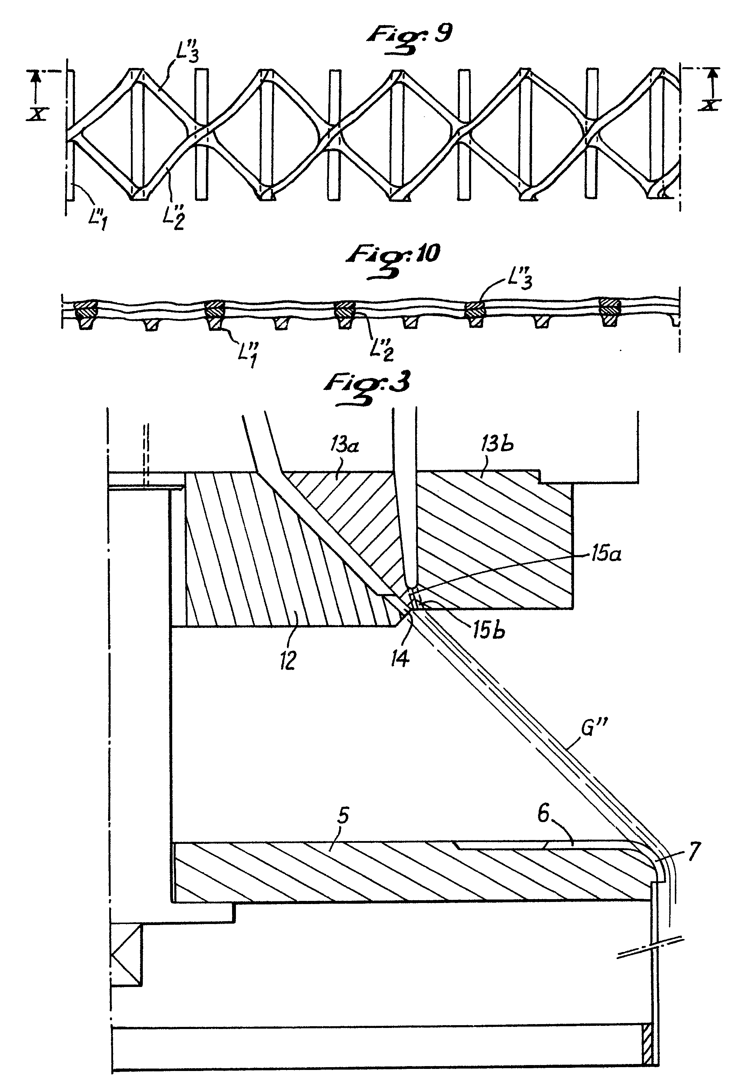

Le dispositif illustré à la figure 3 est également une filière du type NETLON, comportant, outre un élément de filière fixe 12 muni de crans 14, deux éléments de filière mobiles en rotation en sens opposés 13 a et 13 b comportant sur leur surface en regard des crans 15 a et respectivement 15 b.

Le conformateur 5 présente dans ce mode de réalisation la même structure que dans les modes de réalisation précédents.

On a représenté aux figures 9 et 10 un exemple de grillage G'', obtenu par mise en oeuvre du dispositif de la figure 3.

Le grillage illustré aux figures 9 et 10 diffère de celui illustré aux figures 7 et 8, en ce sens qu'une seconde nappe de brins transversaux L''3 est réalisée au-dessus de la nappe de brins transversaux L″2 qui correspond à la nappe de brins transversaux L′2 du mode de réalisation des figures 7 et 8, elle-même en liaison avec une nappe de brins longitudinaux L″1, analogues aux brins longitudinaux L′1 du mode de réalisation précédent.

Les brins transversaux L″2 et L″3 sont sensiblement perpendiculaires entre eux en leurs entrecroisements.

Dans les modes de réalisation illustrés, les brins longitudinaux présentent sensiblement la même épaisseur que les brins transversaux.

En variante, il est possible de réaliser des structures de grillage dans lesquelles les brins longitudinaux présentent une plus grande épaisseur que les brins transversaux.

Bien que l'invention ait été décrite en liaison avec des modes de réalisation particuliers, il est bien évident qu'elle n'y est nullement limitée, qu'on peut lui apporter de nombreuses variantes et modifications, sans pour autant sortir ni de son cadre ni de son esprit.

**Revendications**

1. Dispositif pour réaliser un grillage en matière plastique constitué d'un ensemble de brins longitudinaux parallèles et d'au moins un ensemble de brins transversaux, les brins transversaux du ou de chaque ensemble étant parallèles entre eux et orthogonaux ou inclinés par rapport aux brins longitudinaux en leurs entrecroisements, ledit dispositif comprenant un élément de filière fixe et au moins un élément de filière mobile, disposé concentriquement et animé d'un mouvement de rotation ou d'oscillation verticale, l'élément de filière fixe présentant une pluralité de crans périphériques en regard d'une fente annulaire définie périodiquement entre les éléments de filière, et respectivement de crans prévus dans le ou les éléments de filière mobile, dans lesquels débouche la matière plastique ramollie en provenance d'une extrudeuse, et un conformateur disposé concentriquement par rapport aux éléments de filière et dont le diamètre est supérieur à celui des éléments de filière au niveau de leur extrémité inférieure, caractérisé par le fait que le conformateur (5) comporte sur sa surface (6) au contact de laquelle passe le grillage (G,G′,G″) formé entre les éléments de filière (1.2 ; 8,9 ; 12,13a,13b) une pluralité de crans (7) dont la structure et le nombre correspondent à ceux des crans (4;10;14) prévus sur l'élément de filière fixe (1;8;12).

2. Grillage en matière plastique obtenu par mise en oeuvre du dispositif selon la revendication 1, caractérisé par le fait que l'épaisseur du grillage est au moins égale à environ 10 mm.

3. Grillage selon la revendication 2, caractérisé par le fait que les brins longitudinaux (L1, L′1, L″1) présentent une section tronconique ou triangulaire dont la grande base ou respectivement la base se situe dans le plan de la face inférieure de l'ensemble des brins transversaux (L2,L′2) ou de l'un (L″2) des ensembles desdits brins transversaux.

4. Grillage selon l'une quelconque des revendications 2 et 3, caractérisé par le fait qu'il comporte un seul ensemble de brins transversaux (L2) sensiblement perpendiculaires aux brins longitudinaux (L1) entre leurs entrecroisements.

5. Grillage selon l'une quelconque des revendications 2 et 3, caractérisé par le fait qu'il comporte un seul ensemble de brins transversaux (L′2), formant avec les brins longitudinaux (L′1) en leurs entrecroisements, un angle compris entre 30 et 75°, de préférence de l'ordre de 45°.

6. Grillage selon l'une quelconque des revendications 2 et 3, caractérisé par le fait qu'il comprend deux ensembles de brins transversaux (L″2, L″3), disposés en nappes superposées, les brins transversaux des deux ensembles étant sensiblement perpendiculaires entre eux en leurs entrecroisements.

7. Grillage selon la revendication 6, caractérisé par le fait que les brins transversaux (L″2, L″3) s'entrecroisent au niveau des entrecroisements des brins longitudinaux (L″1) avec les brins transversaux (L″2) de la nappe de brins transversaux en contact avec lesdits brins longitudinaux.

*Fig.1*

*Fig: 7*

*Fig: 8*

*Fig: 2*

*Fig: 9*

$L''_3$

$L''_1$ $L''_2$

$x$ $x$

*Fig: 10*

$L''_3$

$L''_1$ $L''_2$

*Fig: 3*

13a 13b

15a

15b

12 14

G''

5 6 7

### Fig:4

$L_2$

$L_1$

$IV$

### Fig:5

$L_2$

$L_1$

$E$

### Fig:6

$E$

$L_1$

Office européen
des brevets

**RAPPORT DE RECHERCHE EUROPEENNE**

Numero de la demande

EP  89 40 1041

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 616 080  (G.S. NALLE, Jr.) * Colonne 4, lignes 18-27; revendication 1; figure 1 * --- | 1 | E 02 B  11/00 B 29 D  28/00 B 29 C  47/12 |
| A,D | FR-A-1 601 465  (GENERALE ALIMENTAIRE) * En entier * --- | 1-4 | |
| A | US-A-3 163 691  (S.P. ANDERSON et al.) * Colonne 3, ligne 57 - colonne 4, ligne 15; figures 5,8,9 * --- | 1,5-7 | |
| A | US-A-3 554 853  (F.B. MERCER et al.) ----- | | |

**DOMAINES TECHNIQUES RECHERCHES (Int. Cl.4)**

E 02 B
B 29 D
B 29 C

Le présent rapport a été établi pour toutes les revendications

| Lieu de la recherche | Date d'achèvement de la recherche | Examinateur |
|---|---|---|
| LA HAYE | 16-06-1989 | BIRD,C.J. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

                    

& : membre de la même famille, document correspondant

EPO FORM 1503 03.82 (P0402)